(19) 

Europäisches
Patentamt
European
Patent Office
Office européen
des brevets

(11) **EP 3 859 599 B1**

(12) **EUROPEAN PATENT SPECIFICATION**

(45) Date of publication and mention
of the grant of the patent:
**27.12.2023 Bulletin 2023/52**

(51) International Patent Classification (IPC):
***G06V 10/82*** *(2022.01)*      ***G06V 20/56*** *(2022.01)*

(21) Application number: **20155189.2**

(52) Cooperative Patent Classification (CPC):
**G06V 20/56; G06V 10/82**

(22) Date of filing: **03.02.2020**

(54) **TRAINING A GENERATOR NEURAL NETWORK USING A DISCRIMINATOR WITH LOCALIZED DISTINGUISHING INFORMATION**

TRAINING EINES NEURONALEN GENERATORNETZWERKS UNTER VERWENDUNG EINES DISKRIMINATORS MIT LOKALISIERTER UNTERSCHEIDUNGSINFORMATION

FORMATION D'UN RÉSEAU NEURAL GÉNÉRATEUR À L'AIDE D'UN DISCRIMINATEUR COMPORTANT DES INFORMATIONS DE DISTINCTION LOCALISÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.08.2021 Bulletin 2021/31**

(73) Proprietor: **Robert Bosch GmbH**
**70442 Stuttgart (DE)**

(72) Inventors:
• **Schoenfeld, Edgar**
**1013 LL Amsterdam (NL)**
• **Khoreva, Anna**
**70197 Stuttgart (DE)**

(56) References cited:
• **UGUR DEMIR ET AL: "Patch-Based Image Inpainting with Generative Adversarial Networks", ARXIV.ORG, CORNELL UNIVERSITY LIBRARY, 201 OLIN LIBRARY CORNELL UNIVERSITY ITHACA, NY 14853, 20 March 2018 (2018-03-20), XP080866250,**
• **CONG HU ET AL: "Dual Encoder-Decoder based Generative Adversarial Networks for Disentangled Facial Representation Learning", ARXIV.ORG, CORNELL UNIVERSITY LIBRARY, 201 OLIN LIBRARY CORNELL UNIVERSITY ITHACA, NY 14853, 19 September 2019 (2019-09-19), XP081479006,**
• **PHILLIP ISOLA ET AL: "Image-to-Image Translation with Conditional Adversarial Networks", ARXIV.ORG, CORNELL UNIVERSITY LIBRARY, 201 OLIN LIBRARY CORNELL UNIVERSITY ITHACA, NY 14853, 21 November 2016 (2016-11-21), XP080733474, DOI: 10.1109/CVPR.2017.632**
• **Fabio Henrique Kiyoiti ET AL: "Data Augmentation Using GANs Editors: Wee Sun", Proceedings of Machine Learning Research, 1 January 2019 (2019-01-01), pages 1-16, XP055722355, Retrieved from the Internet: URL:https://arxiv.org/pdf/1904.09135.pdf [retrieved on 2020-08-12]**

**EP 3 859 599 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD**

The presently disclosed subject matter relates to a training method for training a generator neural network, a method to generate further training data for a machine learnable model, a method to train a machine learnable model, a training system for training a generator neural network, a generator system for a generator neural network, and an autonomous apparatus and a computer readable medium.

**BACKGROUND**

Machine learnable models find a wide application in many fields of technology. For example, in parts production a machine learnable model may classify a produced part as fault from a sensor reading of the part, e.g., an image taken with an image sensor. Automated quality control has the potential to greatly reduce the percentage of faulty parts produced, e.g., components and the like. An image sensor coupled to a machine learnable model can eliminate almost all parts with visible defects.

For example, in autonomous driving a machine learnable model may classify an object in the environment of the autonomous vehicle as another car, cyclist, pedestrian and so on, e.g., from a sensor reading of the environment. The sensor reading may be obtained with sensors such as an image sensor, LIDAR and so on. A controller of the vehicle will use the classification in making driving decisions. For example, the car may need to reduce speed if a pedestrian appears to be about to cross the road, while there is no need to adjust the driving for a sign waiting at the side of the road-unless the sign is classified as a traffic sign, in which case such a need may arise, and so on.

To train or test a machine learnable model, e.g., comprising a neural network, training data is needed. Such training data may be obtained by taking sensor measurements in an environment that is similar to the one expected to be encountered in practice. However, obtaining the right kind or the right amount of training data is sometimes hard. For example, there may be too little training data for the complexity of a particular machine learnable model, while obtaining additional training data is costly or even impossible. Another problem is that getting enough training data of the right kind is difficult. For example, in the case of an autonomous vehicle, such as a car, if it is currently summer, then obtaining additional training data in a winter landscape will not be possible until it is winter. Another problem is that dangerous situations, e.g., crashes and near crashes, occur only seldom and are hard to enact artificially. Between 2009 and 2015, a fleet of autonomous cars traveled 1.3 million miles and was involved in 11 crashes, (see the article 'How Many Miles of Driving Would It Take to Demonstrate Autonomous Vehicle Reliability?', by Nidhi Kalra, and Susan M. Paddock). Although any crash is one too many, for testing and training purposes, the sensor data of 11 crashes is not much.

Additional training data may be generated using a generator neural network. In particular, generative adversarial networks (GANs) are a powerful tool for data synthesis, e.g., for generating natural looking images, as well as for learning feature representations. A generator neural network may be configured to generate synthesized sensor data, that looks like measured sensor data. For example, a generator neural network may be configured to generate synthesized sensor data from scratch, e.g., taking a noise vector as input and producing the synthesized sensor data as output. For example, a generator neural network may be configured to transform existing measured sensor data from one domain to another, e.g., from summer to winter, or from LIDA sensor data to image sensor data, etc. A generator neural network may be configured to take an additional input, e.g., a class label, indicating to the generator neural network the type of synthesized sensor data that is desired, e.g., the time of year, the type of car in the synthesized sensor data, and so on. Another application is to transfer measured sensor data from one modality to another, e.g., from radar to image data or vice versa. This may make complementary data from different origins interchangeable.

A preferred way to train a generator neural network is together with a discriminator neural network, e.g., in a so-called generative adversarial network (GAN). A GAN comprises at least two neural networks: a generator, and a discriminator. The two networks are trained jointly through adversarial training, e.g., the two networks compete in a game, where the discriminator is optimized to distinguish original images from the training set from images generated by the generator network. Conversely, the generator is trained to make its generated images less and less distinguishable from those contained in the training dataset. In their standard form, GANs generate independent samples from their model of the training data distribution, and need no label information for training or generation. For example, see the article 'Generative Adversarial Nets' by Ian J. Goodfellow, et al. There may be multiple generator networks in a GAN.

An important subclass of GANs are conditional GANs (cGANs), which receive one or more additional inputs to the discriminator network and/or the generator network, and can thus generate new data conditioned on user-specified information. The basic use case is to provide a class label, and then generate images of only that particular class. Recently cGANs have been successfully used to generate photo-realistic synthetic images of different classes; see, e.g., the article 'Large scale GAN training for high fidelity natural image synthesis', by Andrew Brock, et al. cGANs have also been successfully employed for image-to-image and label-to-image translation tasks, aiming to generate realistic looking images while conditioning on dense information such as images or label maps and making use of some prior information about the scene; see, e.g., the article 'Semantic Image Synthesis with Spatially-Adaptive Normalization', by Taesung Park, et al. Other examples of relevant prior art are UGUR DEMIR ET AL: "Patch-Based Image Inpainting with Generative Adversarial Networks", ARXIV.ORG, CORNELL UNIVERSITY LIBRARY, 201 OLIN LIBRARY CORNELL UNIVERSITY ITHACA, NY 14853, 20 March 2018 (2018-03-20), XP080866250, and CONG HU ET AL: "Dual Encoder-Decoder based Generative Adversarial Networks for Disentangled Facial Representation Learning",ARXIV.ORG, j CORNELL UNIVERSITY LIBRARY, 201 OLIN LIBRARY CORNELL UNIVERSITY ITHACA, NY 14853, 19 September 2019 (2019-09-19), XP081479006.

## SUMMARY

It would be advantageous to have an improved training method for training a generator neural network configured to generate synthesized sensor data, and such methods are defined in the claims.

The object of the invention is achieved by the subject-matter of the independent claims. Advantageous embodiments are disclosed by the dependent claims.

In a conventional GAN framework, the discriminator may be configured to output one global decision about the discriminator input data, e.g., if it is measured or synthesized sensor data, e.g., if it belongs to the real or fake class. The inventors found that this global feedback information may be misleading to the generator: often the synthetic sample looks partially real, however, if the discriminator classifies the whole sample as fake, the generator would get a noisy signal that all parts of the sample are fake. This may significantly slow down the training of the generator and may even lead to a suboptimal solution during training.

In the invention, the discriminator is configured to provide localized distinguishing information as output. The localized distinguishing information provides local feedback to the generator neural network; for example, a particular sub-set of the discriminator input looks real, e.g., appears to be drawn from the same distribution as the measured sensor data, while another sub-set of the discriminator input look fake, e.g., does not appear to be drawn from the same distribution as the measured sensor data.

Thus the generator network training uses a training signal which comprises more information, and thus helps training. On the other hand, a discriminator can find that part of its input does not look real, even if the overall impression is that of measured sensor data. Thus, the generator task of fooling the discriminator becomes more challenging which improves the quality of generated samples.

The measured sensor data may be obtained from one or more sensors, some of which may be spatial sensors, e.g., image sensors, LIDAR and so. For example, the measured sensor data may comprise a measured image obtained from an image sensor; and the synthesized sensor data may comprise a synthesized image. Typically, the synthesized sensor data and the measured sensor data have the same resolution. For example, the sensor data may include sensor signals from sensors such as, e.g., video, radar, LiDAR, ultrasonic, motion, imaging camera, and so on. A sensor data may comprise sensor signals from multiple sensor modalities, e.g., image and radar sensor signals. The measured sensor data may comprise audio data.

The measured and synthesized sensor data, may comprise a plurality of values indicating a plurality of sensor values. For example, pixels in image like data, or samples, in audio like data, and so on. The plurality of sub-sets may correspond to the plurality of pixels. For example, the localized distinguishing information may indicate for the plurality of values if said value corresponds to measured sensor data or synthesized sensor data. For example, in case of an image, the localized distinguishing information may comprise per-pixel information indicating whether the pixel appears to be measured sensor data or not. The localized distinguishing information may have a lower resolution than the discriminator input though. For example, the localized distinguishing information may indicate for every n pixels, e.g., every 4 or 16 pixels etc. For example, the localized distinguishing information may correspond to a checkerboard pattern on an image. In addition to the localized distinguishing information, a global decision may also be output.

For example, the discriminator network may be optimized for the localized distinguishing information correctly indicating for the plurality of sub-sets of the discriminator input data if said sub-set corresponds to measured sensor data or synthesized sensor data. The localized distinguishing information may, e.g., comprise a plurality of values corresponding to the plurality of sub-sets. For example, a value of 0 may indicate synthesized sensor data while a value of 1 may indicate measured sensor data.

For example, the discriminator network may sometimes be provided with a measured sensor data, in which case all localized distinguishing information for all of the plurality of sub-sets should indicate that the part is measured sensor data. For example, the discriminator network may sometimes be provided with a synthesized sensor data, in which case all localized distinguishing information for all of the plurality of sub-sets should indicate that the part is synthesized sensor data.

Training for the discriminator network to provide strong localized distinguishing information may be improved by also training the discriminator network on discriminator inputs that are composed of part measured sensor data and part synthesized sensor data. For example, one may obtain composed sensor data by obtaining part of the composed sensor data from a measured sensor data and obtaining part, e.g., the remaining part, from synthesized sensor data. One may combine multiple measured sensor data and/or synthesized sensor data. The output of the discriminator network when applied on the composed sensor data should correspond with the composing; for example, the localized distinguishing information should indicate which part, e.g., pixels or samples, of the discriminator input was obtained from measured sensor data and which part from synthesized sensor data. The composed sensor data may be generated randomly.

In an embodiment, a part taken from measured or synthesized data is a connected and/or convex part, e.g., a rectangle. For example, measured or synthesized data may be combined with a so-called CutMix operation.

Training the discriminator on composed sensor data causes a consistency regularization, encouraging the encoder-decoder discriminator to focus more on semantic and structural changes between real and fake images and to attend less to domain-preserving perturbations. Moreover, it also helps to improve the localization ability of the decoder. This improves the discriminator training, further enhancing the quality of generated samples.

In case composed sensor data is used, it is beneficial to output global distinguishing information as well, e.g., indicating the proportion of the discriminator input data that corresponds to measured sensor data. The global distinguishing information may be trained from the correct proportion in the composed image.

Training the discriminator and/or generator network may use conventional training techniques such a backpropagation, e.g., using techniques used in GAN training, e.g., using a system such as ADAM. The GAN may be a CycleGAN, but this is not necessary.

In an embodiment, the generator network may be configured for a domain translation task. For example, the generator network may be configured to receive measured sensor data from a first domain as input and wherein the generator network is trained to generate synthesized sensor data from a second domain. This can be used for many purposes. For example,

- the first and second domain correspond to a different time of day and/or of the year, and/or
- the first and second domain indicate a type of environment of a vehicle, and/or
- the first and second domain indicate a type of sensor data, and/or
- the first and second domain indicate an occlusion or desocclusion.

For example, to test a machine learnable model on hard to obtain test data, e.g., sensor data corresponding with dangerous situations, e.g., crashes and near crashes, the generator may be applied to an example of the test data, and transfer it to a different domain. For example, types of cars may be changes, time of day or time of year may be changed, etc. Thus, measured sensor data obtained during a near collision, say around noon in spring, may be converted to synthesized sensor data corresponding to an evening in fall, yet still show a near collision. Using the synthesized sensor data the machine learnable model may be tested for a wider range of near-collisions, thus improving the safety of the autonomous apparatus in which the machine learnable model is used.

In an embodiment, the training set comprises ground-truth class-labels for the measured sensor data. A class-label may be provided as an additional input to the discriminator network. For example, the discriminator network may be a conditional network receiving the class label as input. Typically, a class label is also provided as an additional input to the generator network, e.g., to indicate to the generator network to generate synthesized sensor data according to the class label. The latter is not necessary though, for example, a conditional discriminator network may be combined with multiple unconditional generator networks.

The class label indicates a class of the discriminator input data. The discriminator neural network may be optimized to distinguish if the discriminator input data corresponds to the class. For example, the discriminator network may be trained to distinguish between measured sensor data with the correct class label on the one hand and synthesized sensors data or measured sensor data with an incorrect class label on the other hand. This may also be indicated in the localized distinguishing information, e.g., per-pixel.

The domain translation and data synthesis tasks with the encoder-decoder discriminator in principle can be performed between any sensor signals. The proposed framework can be used for data augmentation as well as domain transfer tasks. The generated samples can be then used for training any data-driven method.

A class label may also be used for a generator network configured for a domain translation task. For example, in an embodiment, a class-label may indicate a transformation goal to the generator network. There may be a plurality of transformation goals, e.g., corresponding to a plurality of domains. The training data may be labeled with a domain of the plurality of domains. The generator network may be configured to transform measured sensor data to a domain according to the transformation goal. The discriminator network may be configured to determine if the input sensor data satisfies the domain according to the transformation goal.

In an embodiment, a transformation goal may comprise a time difference, the training data being labeled with a timestamp. The generator network may be configured to transform measured sensor data from a first timestamp to a second timestamp according to the time difference. The discriminator network may be configured to receive as input a first sensor data, a second sensor data and a time difference and to determine if the first sensor data and the second sensor data satisfy the time difference. Any one of the first and second sensor data may be synthesized data in which case, the discriminator network may be trained to reject the images.

An interesting application of sensor data translation is occlusion and desocclusion. The class label, e.g., a transformation goal may indicate an object which is to be occluded, e.g., moved behind another object, or to be desoccluded, e.g., moved in front of another object. For example, a pedestrian may be moved in front of behind a tree; a cyclist in front or behind a car, and so. The discriminator network may be trained to verify if the object is indeed occluded or desoccluded. The class label in this case may be a map indicating the object to be occluded/ desoccluded. In an embodiment, generator network and discriminator network receive data indicating an object in the sensor data, and indication if the object is to be occluded or desoccluded.

In an embodiment, the generator network and/or the discriminator network comprise one or more neurons receiving at least part of the sensor data and optionally at least part of the class label, e.g., transformation goal. For example, the generator network and/or the discriminator network may be arranged to receive multiple channels as input, at least one of the channels encoding the sensor data and/or noise data; optionally at least one of the channels may encode for a class label or transformation goal. For example, the generator network and/or the discriminator network may comprise multiple layers.

The discriminator neural network comprises an encoder network followed by a decoder network. The encoder network is configured to receive as input the discriminator input data, and the decoder network is configured to receive as input the encoder network output and to produce as output the localized distinguishing information. Between the encoder network and decoder network there may be a bottleneck. The bottleneck may foster correct encoding of the encoding network. For example, the encoder network may be configured to produce the global distinguishing information as output. Training for the global distinguishing information thus causes the encoder network to improve the correct learning of encoding of the discriminator network input. For example, the encoder network may be configured to down-sample the encoder input to arrive at the encoding, e.g., the global distinguishing information.

The decoder network receives as input the output of the encoder network. The output of the encoder network may be the global distinguishing information. The decoder network is configured to produce localized distinguishing information which indicates which parts of the discriminator input where real and which were synthesized. For example, the decoder network may be configured to up-sample the decoder input, which may comprise the encoder output.

There may be multiple skip-connections from layers in the encoder network to layers in the discriminator network. For example, a skip-connection may provide information that allows the global distinguishing information to be up-scaled to localized distinguishing information.

In an embodiment, the discriminator network is a U-net. A U-net is conventionally used for image segmentation; for example, the segment organs in a medical image. By comprising a U-net in the discriminator in the field of data generation the U-net may be trained to indicate which parts of the U-net is measured and which is synthesized sensor data. Interestingly, a conventional U-net may be adapted so that the encoder part provides a global output. This provides a training signal which may be used for training of the encoder part.

The method of training a generator network may be used in a method to generate further training data for a machine learnable model. For example, the machine learnable model may be a classifier. For example, the machine learnable model may be configured to receive measured sensor data as input and to generate a classification of the measured sensor data as output. For example, the measured sensor data may be an image taken with an image sensor. For example, the image may be of a produced part and the classification may be if the part is defective. For example, the measured sensor data may be an image taken in an environment of an autonomous apparatus and the classification may indicate if there is a dangerous situation. The machine learnable model may also be a neural network but this is not necessary. The machine learnable model may use other techniques, e.g., SVM, random forests, and so on. The further training data may be used for training, but may also or instead be used for testing.

For example, the method may comprise obtaining an initial training set for the machine learnable model, the initial training set comprising measured sensor data obtained from a sensor, and training a generator network from the initial training set using an embodiment of the training method. The trained generator network may be applied to generate the further training data. The further training data may then be used for training and/or testing the machine learnable model at least on the further training data.

A further aspect concerns a training system for training a generator neural network configured to generate synthesized sensor data. A further aspect concerns a generator system for a generator neural network arranged to generate synthesized sensor data. A further aspect concerns an autonomous apparatus, e.g., an autonomous vehicle. For example, the autonomous apparatus may be a computer-controlled machine, such as a robot, a vehicle, a domestic appliance, a power tool, a manufacturing machine.

Embodiments of the methods and/or systems may be performed on one or more electronic devices. For example, the electronic device, may be a computer.

An embodiment of the methods may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading.

## BRIEF DESCRIPTION OF THE DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a generator neural network and of a discriminator neural network,
Figure 1b schematically shows an example of an embodiment of a generator neural network,
Figure 1c schematically shows a discriminator neural network according to the invention,
Figure 2a schematically shows an example of an embodiment of a training system,
Figure 2b schematically shows an example of an embodiment of a generator system,
Figure 2c schematically shows an example of an embodiment of a training system,
Figure 3 schematically shows an example of an embodiment of a training method,
Figure 4 schematically shows an example of an embodiment of a training system,
Figure 5 schematically shows examples of an embodiment of data in an embodiment of a training method,
Figure 6 schematically shows examples of an embodiment of data in an embodiment of a training method,
Figure 7a schematically shows a computer readable medium having a writable part comprising a computer program according to an embodiment,
Figure 7b schematically shows a representation of a processor system according to an embodiment,
Figure 8 schematically shows an example of an embodiment of a training system.

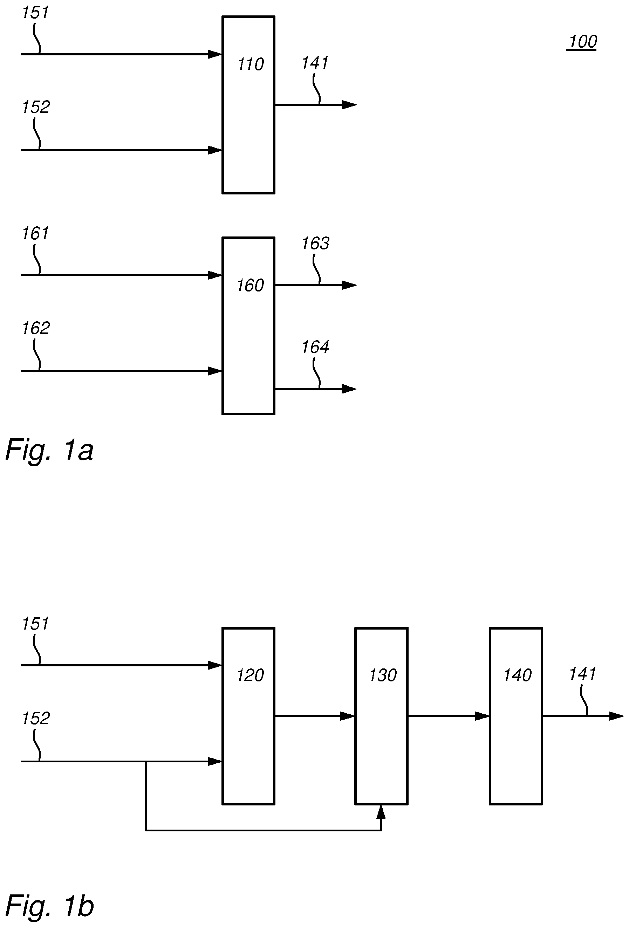

List of Reference Numerals in figures 1a-2c, 4-8:

The following list of references and abbreviations is provided for facilitating the interpretation of the drawings and shall not be construed as limiting the claims.

100    a Generative Adversarial Network (GAN)
110    a generator neural network
120    an encoder part
130    a processing part
140    a decoder part
141    synthesized sensor data
151    generator neural network input
152    a class-label
160    a discriminator neural network
161    a discriminator neural network input
162    a class label
163    localized distinguishing information
164    global distinguishing information
172    an encoder part
174    a decoder part
175    skip connections

200    a training system

210     an optimizer
220     a generator unit
230     a discriminator unit
240     a training set storage
250     a generator system
252     an input unit
254     an output unit
260     a training system
263     a processor system,
264     a memory
265     a communication interface

401     measured sensor data
402     synthesized sensor data
501     a measured sensor data
502     a synthesized sensor data
511, 512     a mask
521, 522     a target global distinguishing data
531, 532     a composed sensor data
541, 542     a localized distinguishing data
551, 552     a global distinguishing data

800     an environment
810     a car
810'    an autonomous car
820     a sensor system
822     a controller
812     a pedestrian
830     a first training database
832     a second training database
840     a training system
842     a generator system
850     a machine learning system
852     a classifier

1000    a computer readable medium
1010    a writable part
1020    a computer program
1110    integrated circuit(s)
1120    a processing unit
1122    a memory
1124    a dedicated integrated circuit
1126    a communication element
1130    an interconnect
1140    a processor system

## DETAILED DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

**Figure 1a** schematically shows an example of an embodiment of a generator neural network 110 and of a discriminator neural network 160. Generator neural network 110 and discriminator neural network 160 are trained together as a GAN 100.

7

Generator neural network 110 is configured to receive a generator neural network input 151 and to produce synthesized sensor data 141. The generator neural network input 151 may comprise a random element, e.g., noise, e.g., a noise vector, which may be used for generation of new synthesized sensor data.

Generator neural network 110 may be configured to receive an additional input: class label 152, but this is optional. Class label 152 indicates a desired property of synthesized sensor data 141, e.g., a desired domain. There may be more than one class label. Input 152 is optional.

Generator neural network input 151 may comprise measured sensor data; generator neural network 110 may be configured for a translation task, e.g., domain translation. For example, generator neural network input 151 may be configured to generate synthesized sensor data like generator neural network input 151 but in a different domain. For a domain translation task some kind of cycle regularization may be used during training. Cycle regularization may be obtained by using multiple generator networks, or by configuring the generator neural network as a conditional neural network, e.g., wherein a class label indicates the desired domain transfer. A CycleGan is not necessary though.

Generator network 110 may be used to generate synthesized sensor data 141. The generator network may be optimized so that generated synthesized sensor data 141 is indistinguishable from measured sensor data by discriminator network 160. For example, that as far as discriminator network 160 can distinguish synthesized sensor data 141 appears as if it was drawn from measured sensor data.

Discriminator neural network 160 is optimized to distinguish between measured sensor data and synthesized sensor data. Discriminator neural network 160 is configured to receive a discriminator neural network input 161. For example, discriminator neural network input 161 may comprise measured sensor data, e.g., sensor data obtained from a sensor. In this case, discriminator neural network 160 may distinguish the discriminator neural network input 161 as measured sensor data. For example, discriminator neural network input 161 may comprise synthesized sensor data, e.g., synthesized sensor data 141. In this case, discriminator neural network 160 may distinguish the discriminator neural network input 161 as synthesized.

For example, discriminator neural network input 161 may comprise data which is a composite of real data, e.g., measured sensor data, and fake data, e.g., synthesized sensor data. In this case, discriminator neural network 160 may distinguish the discriminator neural network input 161 as measured sensor data in part and synthesized sensor data in part.

Discriminator network 160 is configured to produce as output localized distinguishing information 163. The localized distinguishing information indicates for a plurality of sub-sets of the discriminator input data if said sub-set corresponds to measured sensor data or to synthesized sensor data. The discriminator input is partitioned into multiple sub-sets, and localized distinguishing information 163 indicates per sub-set whether it is measured sensor data or synthesized sensor data. For example, the discriminator input may be partitioned into its individual pixels or samples; the localized distinguishing information can thus indicate on a per-pixel or per-sample basis which appear to be measure sensor data, and which do not.

Optionally, discriminator network 160 may be configured to receive an additional input: a class label 162. In case a class label 162 is used, the discriminator network may additionally verify if the discriminator input 161 is according to the class label. For example, discriminator network 160 may only output an is-real output in case the discriminator input 161 is both measured sensor data and according to the class label. This may also be indicated on a per-subset basis.

Optionally, discriminator network 160 may be configured to produce a global distinguishing information 164. For example, the global distinguishing information 164 may indicate what amount, e.g., the size of the part of discriminator input 161 that appears measured sensor data, and the size of the size of the part that appears to be synthesized sensor data. The sizes may be relative. It was found that global distinguishing information 164 may be used as a useful additional training signal. Nevertheless, global distinguishing information 164 is optional as a similar effect may be obtained by only training from the localized distinguishing information.

**Figure 1b** schematically shows an example of an embodiment of a generator neural network. In this embodiment, the generator neural network receives measured sensor data as part of the input 151; this is not necessary, e.g., noise may be used instead or in addition.

The generator network of figure 1b comprises three parts: an encoder part 120, a processing part 130 and a decoder part 140.

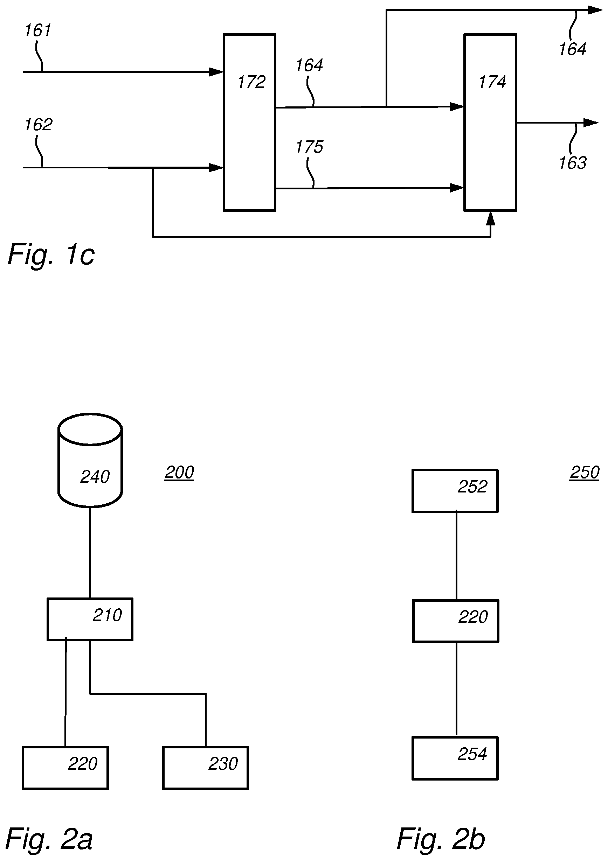

Encoder part 120 is configured to receive the input sensor data 151. Encoder part 120 may be configured with a so-called bottleneck at its output. Processor part 130 receives the output of the encoder part 120, decoder part 140 may receive the output of the processing part. The optional class-label 151, may comprise a transformation goal which is to be applied to one or more parts of the network. As shown in figure 1, the class-label 152 is provided as input to the encoder part and as an input to the processing part. Although not shown in figure 1b, it was found to be particularly advantageous to supply the transformation goal as an input to the decoder part 140 as well.

In an embodiment, the class-label could be an input to the decoder part 140. In an embodiment, the class-label could be an input to the decoder part 140 and to the encoder part 130.

In an embodiment, encoder part 120 comprises multiple convolution layers, processor part 130 comprises multiple residual layers and the decoder part comprises multiple convolution layers. Various known types of layers may be added. For example, in an embodiment, encoder part 120 comprises 5 convolution layers, processor part 130 comprises 4 residual layers and the decoder part comprises 5 convolution layers. The network may be larger or smaller as desired, or may even be much larger.

**Figure 1c** schematically shows a discriminator neural network according to the invention.

The discriminator network of figure 1c comprises an encoder part 172 and a decoder part 174.

Encoder part 172 is configured to receive the discriminator input 161, and optionally the class-label 162 (if any). Encoder part 172 may be configured with a so-called bottleneck at its output. Encoder part 172 may be configured to produce as output a global distinguishing information 164. For example, encoder part 172 may be a conventional discriminator network. Global distinguishing information 164 may be provided as an output of the discriminator network. Since during training it is known how much of discriminator input 161 is measured and how much is synthesized, a ground truth value is available, and thus global distinguishing information 164 may be used as an additional training signal, e.g., to train the encoder part 172.

Decoder part 174 may receive the output of the encoder part 172. Optionally, the class-label 162 may also be received by the decoder part 174. In an embodiment, encoder part 172 and decoder part 174 may comprise multiple convolution layers, etc. Decoder part 174 is configured to produce as output the localized distinguishing information 163. The localized distinguishing information 163 provides more detailed information on which parts of the discriminator input 161 looks real and which did not. Layers of the decoder network may receive input of corresponding layers in the encoder input, e.g., so-called skip connections 175. Thus a layer in the decoder has access to information in the encoder at a comparable resolution, e.g., the same resolution.

**Figure 2a** schematically shows an example of an embodiment of a training system 200. Training system 200 is configured for training a generator neural network arranged to transform measured sensor data into synthesized sensor data. For example, system 200 may comprise a generator unit 220 configured for applying the generator neural network, and a discriminator unit 230 configured for applying a discriminator neural network. For example, generator unit 220 and/or discriminator unit 230 may comprise storage for storing parameters of the respective neural networks. For example, generator unit 220 and/or discriminator unit 230 may be configured to receive network inputs, apply the inputs and the parameters according to the neural network type and to provide the network result on an output.

System 200 comprises an optimizer 210. Optimizer 210 is configured to train the generator network together with the discriminator neural network. The generator network is optimized to generated synthesized sensor data, and the discriminator network is optimized to distinguish between measured sensor data and synthesized sensor data. In order to train the two neural networks, optimizer 210 has access to a training set, e.g., as stored in a training set storage 240. The training set comprises measured sensor data. Sensor data may be image data, e.g., images, but may comprise instead or in addition a wide variety of data, e.g., radar data, ultrasonic sensor data, etc. In an embodiment, sensor data may be obtained from a sensor configured to produce two-dimensional data characterizing an environment of the sensor. The sensor may be employed in a machine. In an embodiment, at least part or all of the sensor measurements have domain information and/or sensor time information indicating the domain in which the condition, e.g., the environment or environment type, and/or the time when the sensor data was obtained.

A sensor data may be a multiple of conjoint sensor data, possibly of different sensor modalities. For example, in the example of autonomous vehicles one sensor data item may comprise, one or more of image, radar, and other sensor data, typically concurrent data recorded from multiple sensors. For example, system 200 may comprise a communication interface for accessing the training set. Sensor data may be measured, e.g., as received from a sensor, e.g., real, or true; or sensor data may be generated, e.g., as generated by a generator unit, e.g., fake.

Once the generator network is sufficiently trained, e.g., after convergence or after exhausting the training data, or after a preset number of training iterations, the generator network may be used in an application, typically without the corresponding discriminator network. For example, **figure 2b** schematically shows an example of an embodiment of a generator system 250. Generator system 250 is configured to apply a generator neural network, such as the generator neural network trained by system 200, e.g., the generator neural network of generator unit 220. Generator system 250 is thus arranged to generate synthesized sensor data. System 250 may comprise an input unit 252. Input unit 252 may be configured for receiving as input measured sensor data, e.g., in case of a domain transferring task. Input unit 252 may be configured for receiving a noise component, e.g., in case of a generating task. Input unit 252 may be configured for both noise and sensor data as well. Input unit 252 might also be used to receive sensor data that was not measured but generated. After generating the synthesized sensor data, the generated output sensor data may be put on output 254, e.g., transmitted. For example, system 250 may comprise a communication interface for receiving and/or transmitting the sensor data.

System 250 comprises a generator system 220 configured to apply the trained generator network to the received input measured sensor data. Typically, system 250 is configured to perform further tasks. For example, system 250 may be configured to augment further training data for a further neural network, e.g., for a classifier. System 250 and system 200 may be the same system, or they may not be. Systems 200 and/or 250 may be a single device or may comprise multiple devices.

Systems 200 and/or 250 may communicate with each other or with external storage or input devices or output devices over a computer network. The computer network may be an internet, an intranet, a LAN, a WLAN, etc. The computer network may be the Internet. The systems comprise a connection interface which is arranged to communicate within the system or outside of the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna, etc.

The execution of system 200 and 250 is implemented in a processor system, e.g., one or more processor circuits, examples of which are shown herein. Figures 1a, 1b, 1c, 2a and 2b show functional units that may be functional units of the processor system. For example, figures 1a-2b may be used as a blueprint of a possible functional organization of the processor system. The processor circuit(s) are not shown separate from the units in these figures For example, the functional units shown in figures 1a-2b may be wholly or partially implemented in computer instructions that are stored at system 200 and 250, e.g., in an electronic memory of system 200 and 250, and are executable by a microprocessor of system 200 and 250. In hybrid embodiments, functional units are implemented partially in hardware, e.g., as coprocessors, e.g., neural network coprocessors, and partially in software stored and executed on system 200 and 250. Parameters of the network and/or training data may be stored locally, e.g., at system 200 and 250, or may be stored in cloud storage.

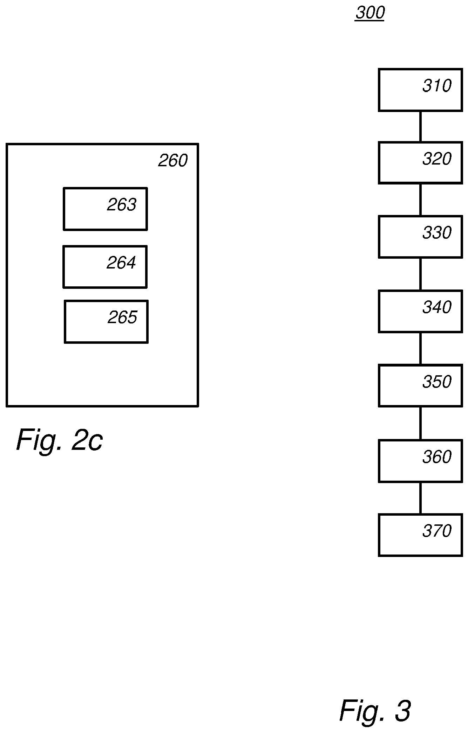

**Figure 2c** schematically shows an example of an embodiment of a training system 260. Training system 260 may comprise a processor system 263, a memory 264, and a communication interface 265. For example, the execution of system 200 may be implemented in a processor system, e.g., one or more processor circuits, e.g., microprocessors, examples of which are shown herein. Parameters of the networks and/or training data may be stored locally at system 260 or may be stored in cloud storage.

**Figure 3** schematically shows an example of an embodiment of a training method 300. Method 300 is a training method for training a generator neural network configured to generate synthesized sensor data. Method 300 comprises

- accessing (310) a training set of measured sensor data obtained from a sensor,
- training (320) the generator neural network together with a discriminator neural network, the training comprising

  - generating (330) synthesized sensor data using the generator neural network,
  - optimizing (340) the discriminator network to distinguish between measured sensor data and synthesized sensor data,
  - optimizing (350) the generator network to generate synthesized sensor data which is indistinguishable from measured sensor data by the discriminator network, wherein

- the discriminator network is configured to receive (360) discriminator input data comprising synthesized sensor data and/or measured sensor data, and to produce (370) as output localized distinguishing information, the localized distinguishing information indicating for a plurality of sub-sets of the discriminator input data if said sub-set corresponds to measured sensor data or to synthesized sensor data.

In the various embodiments of system 100, 200 and 250, one or more communication interfaces may be selected from various alternatives. For example, the interface may be a network interface to a local or wide area network, e.g., the Internet, a storage interface to an internal or external data storage, a keyboard, an application interface (API), etc.

The systems 100, 200 and 250 may have a user interface, which may include well-known elements such as one or more buttons, a keyboard, display, touch screen, etc. The user interface may be arranged for accommodating user interaction for configuring the systems, training the networks on a training set, or applying the system to new sensor data, etc.

Storage may be implemented as an electronic memory, say a flash memory, or magnetic memory, say hard disk or the like. Storage may comprise multiple discrete memories together making up the storage, e.g., storage 264, 240, etc. Storage may comprise a temporary memory, say a RAM. The storage may be cloud storage.

Systems 100, 200 or 250 may be implemented in a single device. Typically, the systems 100, 200 and 250 each comprise a microprocessor which executes appropriate software stored at the system; for example, that software may have been downloaded and/or stored in a corresponding memory, e.g., a volatile memory such as RAM or a non-volatile memory such as Flash. Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, systems 100, 200 and 250 may comprise circuits for the evaluation of neural networks.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

Below several further optional refinements, details, and embodiments are illustrated. Below it is assumed that the measured and synthesized sensor data comprise an image. This is not necessary however, instead of an image sensor another type of sensor may have been used to obtain the measured sensor data; such different sensor data may also be used in addition to an image sensor.

GAN 100 and training system 200 may use a conventional training technique in part, except that an additional training signal is available by comparing the localized distinguishing information with the corresponding sub-sets in the discriminator input 161.

For example, in a conventional GAN training system that does not use localized distinguishing information one could train two networks: a generator G and a discriminator D, by minimizing the following competing objectives, e.g., in an alternating manner:

$$L_D = -E_x[\log D(x)] - E_z[\log(1 - D(G(z)))],$$
$$L_G = -E_z[\log D(G(z))] \quad (1)$$

G aims to map a latent variable $z \sim p(z)$ sampled from a prior distribution to a realistic-looking image, e.g., like measured sensor data, while D aims to distinguish between a real $x$ and generated G(z) images, e.g., between measured sensor data and synthesized sensor data. Ordinarily, G and D may be modeled as a decoder and an encoder convolutional network, respectively. For example, the discriminator may output a value between 1 and 0 to indicate how real the input seems.

The discriminator D is implemented as a combination of an encoder and decoder, e.g., as a so-called U-Net. For example, the encoder part could be implemented as a known discriminator, e.g., by reusing building blocks of the known discriminator classification networks as an encoder part. The decoder part could be built by re-using building blocks from known generator networks.

In other words, the discriminator comprises a downsampling network but also an upsampling network. An advantage of using a decoder part or an upsampling part, is that the discriminator network produces an output signal of a higher resolution, than what the output would be if only a downsampling or encoder network were used. In particular, the discriminator can give localized feedback on the quality of the synthesized sensor data, even on a per-pixel level. The resolution of the localized distinguishing information may be the same as that of the synthesized sensor data, but may be lower instead.

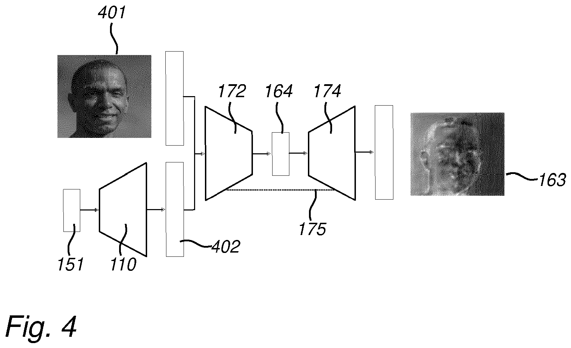

The downsampling network and the upsampling networks may be connected via a bottleneck, as well as skip-connections that copy and concatenate feature maps from the encoder and the decoder modules. We will refer to this discriminator as $D^U$. While a conventional discriminator D(x) classifies a discriminator input image x into being real or fake, an embodiment of discriminator $D^U(x)$ may additionally perform this classification on a *per-pixel* basis, segmenting image *x* into real and fake regions; in addition the discriminator may still give a global image classification of x, e.g., from the encoder. **Figure 4** schematically shows an example of an embodiment of a training system. Shown in figure 4 is a discriminator which comprises an encoding or downsampling part 172, which may produce global distinguishing information 164, and an upsampling part 174 which takes the global distinguishing information 164 and upsamples it to local distinguishing information 163. Global distinguishing information 164 may serve as a bottle-neck, which may be used to train the encoder.

Also shown in figure 4 is a generator network 110, which receives a generator input 151, which may comprise a random component, e.g., a noise vector, and/or sensor data, typically measured sensor data. Shown in figure 4 is that discriminator input 172 either receives measured sensor data 401, in this case an image of a person, or synthesized sensor data 402, e.g., an output of generator network 110. As is shown below, the training signal may be improved by combining sensor data 401 and 402. Decoder part 174 receives as input the global distinguishing information, which is to be upscaled, but also skip connections 175, which provide information from layers in the encoder part.

A skip connection 175 preferably connects layers of the same or similar resolution. For example, layer *i* of encoder 172 may be connected to a layer *n - f(i)*, wherein f is an increasing function and *n* denotes the number of layers of decoder 174. If the number of layers is the same, one may use the identity for f. Thus one or more layers of decoder 174 may receive as input the output of the previous layer of decoder 174 but also the output or input of a corresponding layer in encoder 172.

The discriminator learns both global and local differences between real and fake images, something which is helped by using both global and local outputs. Hereafter, we refer to the encoder module of the discriminator as $D_{enc}^U$ and to the decoder module as $D_{dec}^U$. A discriminator loss for use in training may be computed by taking the decisions from both $D_{enc}^U$ and $D_{dec}^U$, e.g.:

$$\mathcal{L}_{D^U} = \mathcal{L}_{D^U_{enc}} + \mathcal{L}_{D^U_{dec,}} \qquad (2)$$

The loss for the encoder $L_{Denc}{}^U$ may be computed from the scalar output of $D^U_{enc}$. For example, one may use:

$$\mathcal{L}_{D^U_{enc}} = -\mathbb{E}_x[\log D^U_{enc}(x)] - \mathbb{E}_z[\log(1 - D^U_{enc}(G(z)))], \quad (3)$$

The loss for the decoder $L_{Denc}U$ may be computed as the mean decision over all sub-set, e.g., pixels:

$$\mathcal{L}_{D^U_{dec}} = -\mathbb{E}_x\Big[\sum_{i,j} \log[D^U_{dec}(x)]_{i,j}\Big]$$
$$- \mathbb{E}_z\Big[\sum_{i,j} \log(1 - [D^U_{dec}(G(z))]_{i,j})\Big]. \qquad (4)$$

Here, $[D^U_{dec}(x)]_{i,j}$ and $[D^U_{dec}(G(z))]_{i,j}$ refer to the discriminator decision at pixel $(i,j)$. In an embodiment, per-pixel outputs of $D_{dec}{}^U$ are derived based on global information from high-level features, enabled through the process of upsampling from the bottleneck, as well as more local information from low-level features, mediated by the skip connections from the intermediate layers of the encoder network. An advantage of encoder/decoder architecture is that the global distinguishing information can be used as an additional training signal.

As the generator objective one may use:

$$\mathcal{L}_G = -\mathbb{E}_z\Big[\log D^U_{enc}(G(z)) + \sum_{i,j} \log[D^U_{dec}(G(z))]_{i,j}\Big], \qquad (5)$$

This loss function encourages the generator to focus on both global structures and local details while synthesizing images in order to fool the more powerful discriminator $D^U$. Loss functions such as the ones suggested herein may be used in an otherwise conventional training system, e.g., ADAM, e.g., using GAN-style backpropagation. For example, in an embodiment, the discriminator trains (1) for one or more iterations, followed by the generator training (2) for one or more iterations. Phases (1) and (2) may be repeated until convergence, or until a set number of iterations, etc. For example, the generator may be repeatedly applied to obtain synthesized sensor data, and the discriminator may be repeatedly applied to measured sensor data or synthesized sensor data, or a composite. During discriminator training the loss of the discriminator may be optimized, e.g., reduced. During generator training the loss of the generator may be optimized, e.g., reduced.

To further improve training a consistency regularization may be introduced to better train the discriminator. This leads to a higher quality feedback signal from the discriminator which in turn leads to a better generator neural network. The localized distinguishing information, e.g., per-pixel decisions, of a well-trained $D^U$ discriminator should be equivariant under any class-domain-altering transformations of images. However, this property is not guaranteed by the structure of the neural networks.

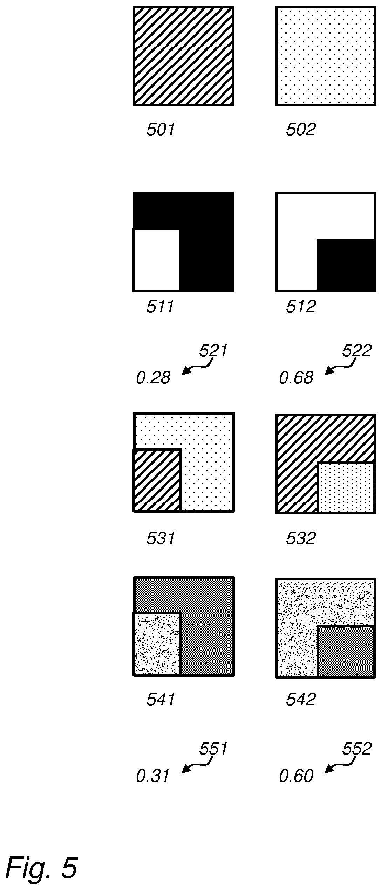

To obtain such equivariancy, the discriminator may be regularized to focus more on semantic and structural changes between real and fake data and to pay less attention to arbitrary class-domain-preserving perturbations. Therefore, we propose the consistency regularization of the discriminator, explicitly encouraging the decoder module $D_{dec}{}^U$ to output equivariant predictions for composed sensor data. For example, one way to compose sensor data, e.g., images, is to cut and paste patches from images of different classes, e.g., real and fake. For example, the transformation may be the so-called CutMix transformation of real and fake samples. An advantage of CutMix in the context of GAN training is that it does not alter the real and fake image patches used for mixing, preserving their original class domain, and provides a large variety of possible outputs. We visualize the CutMix augmentation strategy and the $D^U$ predictions in Figure 5.

**Figure 5** schematically shows examples of an embodiment of data in an embodiment of a training method. Figure 5 shows a schematic visualization of the CutMix regularization and the predictions of an embodiment of the discriminator, in this case a U-net, on the CutMix images.

The first row of figure 5 shows a real image 501, e.g., measured sensor data, and a fake image 502, e.g., synthesized sensor data. The second row shows binary masks M, which may be used for the CutMix operation. In this row of figure 5 a white color is used for real, and a black color for fake. Mask 511 will cause mostly fake image in the transformed image, while mask 512 will cause mostly real image. The corresponding target global distinguishing scores c are shown below. A target 521 of 0.28 indicating that most of the mask 511 is black; and a target 522 of 0.68 indicating that most of mask 512 is white. The discriminator is trained for the global distinguishing information matches the target scores c.

The fourth row schematically shows composed sensor data, in this case CutMix images from real and fake samples. For example, image 531 may have been obtained by taking the part from fake image 502 indicated by mask 511 and taking the part from real image 501 indicated by mask 511. For example, image 532 may have been obtained by taking the part from fake image 502 indicated by mask 512 and taking the part from real image 502 indicated by mask 512. For example, if the images are images taken from the environment of a vehicle, e.g., street scenes, then the composed images 531 and 532 may partly show a realistic street scene and partly a less-realistic looking generated street scene. The same holds for products, e.g., goods, that may or may not have production defects. A composed sensor data may show the product but part of it corresponds to measured sensor data, e.g., an image of the product as it rolls of a production line, with the other part synthesized.

The fifth row shows corresponding real/fake segmentation maps of the discriminator $D^U$ with its predicted global distinguishing scores below it. Note that global distinguishing score 551 is close to target 521 and global distinguishing score 552 is close to target 522.

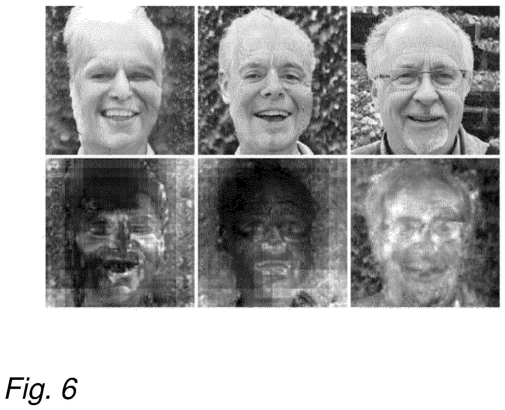

The localized discriminator outputs 541 and 542 use a darker greyscale to indicate likely synthesized sensor data and a lighter grey scale for likely measured sensor data. In this case the colors in 541 and 542 are schematically indicated as uniform, but in actual data, e.g., as shown in figure 6, the data will typically not be uniform, but a mixture of darker and lighter greys indicating regions in which the discriminator is more or less certain that the part is synthesized sensor data.

For example, in an embodiment a new training sample is composed $\tilde{x}$ for the discriminator $D^U$ by mixing measured sensor data $x$ and synthesized sensor data $G(z) \in R^{W \times H \times C}$ with the mask M:

$$\tilde{x} = \mathrm{mix}(x, G(z), \mathrm{M}),$$
$$\mathrm{mix}(x, G(z), \mathrm{M}) = \mathrm{M} \odot x + (1 - \mathrm{M}) \odot G(z), \quad (6)$$

where M e {0,1}$W \times H$ is the binary mask indicating if the pixel (i,j) comes from the real (Mi,j = 1) or fake (Mi,j = 0) image, 1 is a binary mask filled with ones, and $\odot$ is an element-wise multiplication. The class label c e (0,1) for the new synthetic image $\tilde{x}$ is assigned proportionally to the number of pixels coming from the real image, e.g., $c = \frac{|\mathrm{M}|}{W*H}$. Note that for the synthetic sample $\tilde{x}$, c and M are the ground truth for the encoder and decoder modules of the discriminator $D^U$, respectively. Here the CutMix operator is applied to purely generated synthesized sensor data, but the same applies to synthesized data which is obtained by domain-transferring measured sensor data.

Given a CutMix operation, e.g., such as the one above, one can train the discriminator to provide consistent per-pixel predictions, e.g., $D^U_{dec} \, \mathrm{mix}(x, G(z), \mathrm{M})) \approx \mathrm{mix}\left(D^U_{dec}(x), D^U_{dec}(G(z)), \mathrm{M}\right.$, by introducing the consistency regularization loss term in the discriminator objective:

$$\mathcal{L}^{cons}_{D^U_{dec}} = \left\| D^U_{dec}\Big(\mathrm{mix}(x, G(z), \mathrm{M})\Big) - \mathrm{mix}\Big(D^U_{dec}(x), D^U_{dec}(G(z)), \mathrm{M}\Big)\right\|^2, \quad (7)$$

where $\|\cdot\|$ denotes a norm, such as the $L^2$ norm. This consistency loss may then be taken between the per-pixel output of $D^U_{dec}$ on the CutMix image and the CutMix between outputs of the $D^U_{dec}$ on real and fake images, penalizing the discriminator for inconsistent predictions.

The loss term in Eq. 7 can be included, e.g., added, to the discriminator objective in Eq. 2, possibly with a

weighting hyper-parameter $\lambda$:

$$\mathcal{L}_{D^U} = \mathcal{L}_{D_{enc}^U} + \mathcal{L}_{D_{dec}^U} + \lambda \mathcal{L}_{D_{dec.}^U}^{cons} \qquad (8)$$

Hyper-parameter $\lambda$ may e.g., equal 1. The generator objective $L_G$ may remain unchanged, see Eq. 5. In an embodiment, with a U-Net GAN a non-saturating GAN objective formulation may be used.

The introduced consistency regularization as well as the U-Net architecture of the discriminator can be combined with any other adversarial losses of the generator and discriminator.

**Figure 6** schematically shows examples of an embodiment of data in an embodiment of a training method. From left to right shows images obtained from later stages of the training. The top row shows synthesized sensor data generated by the generator network. The bottom row shows the corresponding localized distinguishing information. Training data comprised a set of images of people. The generator network is optimized to generate images that appear to be drawn from the same distribution. In the top row, one can see that images appear more realistic as the training progresses. In the bottom row the discriminator output is shown, it can be seen that as the training progresses the discriminator output becomes increasingly lighter grey indicating that the discriminator considers of the image to be likely measured sensor data. For example, in the first two images the top left of the head appears unrealistic which is reflected in a dark patch in the top left of the localized distinguishing information.

The example images were obtained from an embodiment in which a U-Net type discriminator network was used. The synthetic image samples are obtained from a fixed noise vector at different training iterations. Brighter colors correspond to the discriminator confidence of pixel being real (and darker of being fake). Note that the U-Net discriminator provides very detailed and spatially coherent response to the generator, enabling it to further improve the image quality, e.g., the unnaturally large man's forehead is recognized as fake by the discriminator and is corrected by the generator throughout the training.

Embodiments may be used in GAN models for data synthesis and data augmentation. Its use is particularly advantages when collecting additional data is expensive or legally not possible. In the context of autonomous driving this includes extreme situations, like dangerously maneuvering cars or near-hit situations involving pedestrians.

For example, the methods, e.g., training methods, may be computer implemented methods. For example, accessing training data, and/or receiving input data may be done using a communication interface, e.g., an electronic interface, a network interface, a memory interface, etc. For example, storing or retrieving parameters may be done from an electronic storage, e.g., a memory, a hard drive, etc., e.g., parameters of the networks. For example, applying a neural network to data of the training data, and/or adjusting the stored parameters to train the network may be done using an electronic computing device, e.g., a computer.

The neural networks, either during training and/or during applying may have multiple layers, which may include, e.g., convolutional layers and the like. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform the method, e.g., method 300. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

Below a particular detailed embodiment is discussed, which is built upon the state-of-the-art BigGAN model, and extend its discriminator. For details on BigGAN see, Andrew Brock, Jeff Donahue, and Karen Simonyan. Large scale GAN training for high fidelity natural image synthesis. In International Conference on Learning Representations (ICLR), 2019; referred to as 'BigGAN'.

In an embodiment, the BigGAN generator and discriminator architectures are adopted for the $256 \times 256$ and $128 \times 128$ resolution with a channel multiplier ch =64. The original BigGAN discriminator downsamples the input image to a feature map of dimensions 16ch $\times$ 4 $\times$ 4, on which global sum pooling is applied to derive a 16ch dimensional feature vector that is classified into real or fake. In an embodiment, the BigGAN discriminator is modified by copying the generator architecture and appending it to the 4 × 4 output of the discriminator. In this embodiment, the features are successively upsampled via ResNet blocks until the original image resolution (H × W) is reached. Furthermore, the input to every decoder ResNet block is concatenated with the output features of the encoder blocks that share the same intermediate resolution. In this way, high-level and low-level information are integrated on the way to the output feature map. In this embodiment, the decoder architecture is almost identical to the generator, with the exception of changing the number of channels of the final output from 3 to *ch*, appending a final block of 1 × 1 convolutions to produce the 1 × H × W output map; no class-conditional BatchNorm is used in the decoder. Class information is provided to *DU* with projection to the ch-dimensional channel features of the U-Net encoder and decoder output. In contrast to BigGAN, it was found beneficial not to use a hierarchical latent space, but to directly feed the same input vector z to BatchNorm at every layer in the generator. Furthermore, it was also found beneficial to remove the self-attention layer in both encoder and decoder; experiments showed that they did not contribute to the performance yet lead to memory overhead.

Experiments were also performed on an unconditional embodiment. Note that the original BigGAN is a class-conditional model. For the unconditional model, the class-conditional BatchNorm is replaced with selfmodulation, wherein the BatchNorm parameters are conditioned only on the latent vector z, and do not use the class projection of in the discriminator. In this embodiment, these modifications provide a two-headed discriminator. While each decoder head is already sufficient to train the network, we find it beneficial to compute the GAN loss at both heads with equal weight. The hinge loss may be kept. Models that also employ consistency regularization in the decoder output space benefit from using non-saturating loss.

During the training, for each iteration, a mini-batch of CutMix images (x-; c; M) is created with probability $r_{mix}$. This probability is increased linearly from 0 to 0.5 between the first n epochs in order to give the generator time to learn how to synthesize more real looking samples and not to give the discriminator too much power from the start. CutMix images are created from the existing real and fake images in the mini-batch using binary masks M. For sampling M, we use the original CutMix implementation: first sampling the combination ratio c between the real and generated images from the uniform distribution (0, 1) and then uniformly sample the bounding box coordinates for the cropping regions of x and G(z) to preserve the c ratio. Binary masks M also denote the target for the decoder $D_{dec}^U$, and for the encoder $D_{enc}^U$ we use soft targets c - the fraction of 1s in M. We set weighing parameter $\lambda$ to 1. Note that the consistency regularization does not impose much overhead during training. Extra computational cost comes only from feeding additional CutMix images through the discriminator while updating its parameters

The original training parameters of BigGAN may be adopted. In particular, one may use a uniformly distributed noise vector z in [-1, 1]$^{140}$ as input to the generator, and the Adam optimizer with learning rates of 1e-4 and 5e-4 for G and *DU.* It was found beneficial in experiments to operate with considerably smaller mini-batch sizes than BigGAN, e.g., batch sizes between 20 and 50.

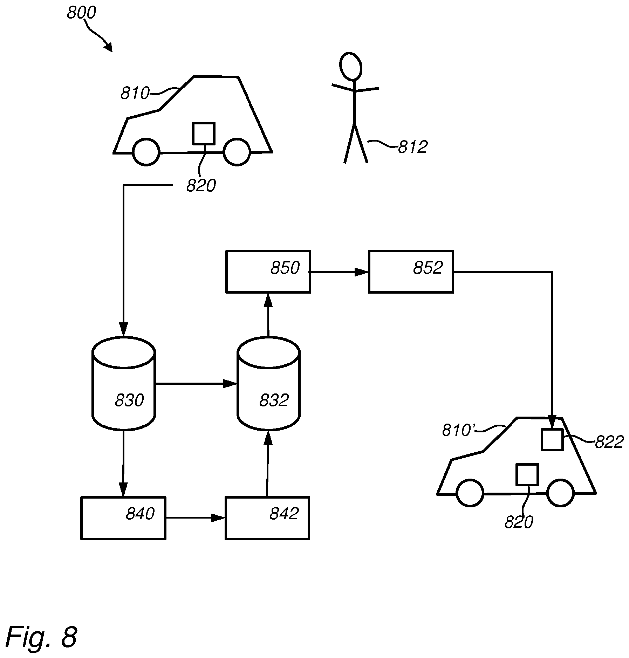

**Figure 8** schematically shows an example of an embodiment of a training system 840.

Figure 8 shows an autonomous apparatus, in this case an autonomous car 810', situated in an environment 800, e.g., a traffic situation. In environment 800 there may be various objects, both static and dynamic, that affect how the apparatus 810 may be controlled. A similar apparatus, in this case car 810, may be used to obtain measured sensor data. For example, shown in figure 8 is a pedestrian 812 crossing the environment behind car 810. Apparatus 810 may be autonomous but does not need to be. Apparatus 810 and 810' may be the same except for an update in controller 822.

Car 810 may comprise a sensor system 820, e.g., comprising one or more image sensors, radar, lidar and so on, to sense the environment of the car, e.g., environment 800. For example, sensor system 820 may be configured to produce measured sensor data comprising information on environment 800. Car 810 may comprise one or more actuators to move the car through environment 800, e.g., wheels and motor.

Sensor data obtained from sensor system 820 may be stored in a first training database 830. A training system 840, e.g., configured for an embodiment of a training method for training a generator neural network may be configured to train a generator to generate synthesized sensor data which appears to be drawn from first training database 830. Training system may be configured to obtain an initial training set form first database 830 and train a generator network from the initial training set. For example, a training system 840 may produce a generator network for use in a generator system 842. Generator system 842 may be used to generate additional sensor data, e.g., synthesized sensor data. The synthesized sensor data may be stored in a second training database 832. The second training database 832 may also comprise the original measured sensor data, e.g., taken from first database 830.

The synthesized training data may be generated with or without the use of class-labels. For example, the measured training data in first database 830 may be labeled, e.g., by apparatus 810, by sensor 820, by a further device (not shown), or by a human. The class labels may be used to generate synthesized sensor data of a particular kind, e.g., with a nearby pedestrian. An unconditional generator neural network may be configured to receive as input a measured sensor data or a noise vector, or both. Also a conditional generator neural network may be configured to receive as input a measured sensor data or a noise vector, or both. Both types may be trained for pure generation or for domain transfer or for a combination, e.g., generation in the context of a measured sensor data.

A machine learning system 850 may be configured to train a machine learnable model on the training data in second database 832. For example, the machine learnable model may be a classifier. The machine learnable model may comprise a neural network, but this is not necessary; For example, it may comprise an SVM, random forests, and so on. Machine learning system 850 may be configured with a learning algorithms consistent with the type of machine learnable model, e.g., SVM training or random forest training. Machine learning system 850 may use the synthesized sensor data for training, for testing, or for both. Machine learning system 850 produces a trained a classifier 852. For example, classifier 852 may be configured to classify an object in the environment of the apparatus from the measured sensor data.

The classifier 852 may be included in a controller for an autonomous apparatus 810', e.g., like car 810. For example, a controller 822 may comprise classifier 852. Controller 822 may be configured to generate a control signal to control the autonomous apparatus 810'. Controller 822 may be configured to generate a control signal at least from the object classified by the classifier. For example, if classifier 852 classifies that an environment 800 comprises a pedestrian like 812, then it is not safe to revert the car. The control signal may be configured to control the actuators, e.g., turning and steering of the wheels and/or motor.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

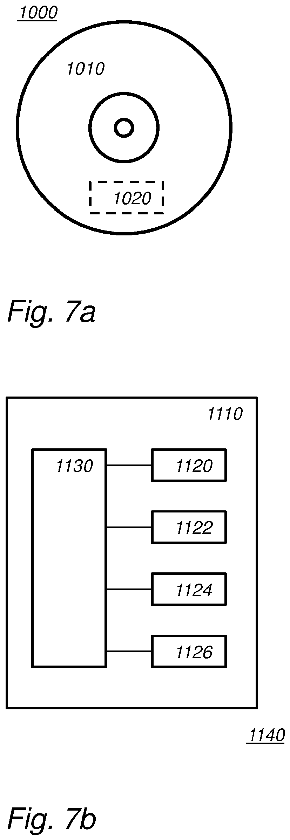

**Figure 7a** shows a computer readable medium 1000 having a writable part 1010 comprising a computer program 1020, the computer program 1020 comprising instructions for causing a processor system to perform a training method according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said training method.

**Figure 7b** shows in a schematic representation of a processor system 1140 according to an embodiment of a training system, or generator system. The processor system comprises one or more integrated circuits 1110. The architecture of the one or more integrated circuits 1110 is schematically shown in Figure 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., a training device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While device 1140 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the device 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A training method (300) for training a generator neural network (110; 120, 130, 140) configured to generate synthesized sensor data (141) for training and testing a classifier, wherein the classifier is classifying measured sensor data, the method comprising

   - accessing (310) a training set (240) of measured sensor data obtained from a sensor,
   - training (320) the generator neural network together with a discriminator neural network (160; 172, 174), wherein the discriminator network comprises an encoder network and a decoder network, wherein
   - the encoder network is configured to receive as input the discriminator input data,
   - the decoder network is configured to receive as input the encoder network output and to produce as output localized distinguishing information,
   the training comprising
   - generating (330) synthesized sensor data using the generator neural network,
   - optimizing (340) the discriminator network to distinguish between measured sensor data and synthesized sensor data,
   - optimizing (350) the generator network to generate synthesized sensor data which is indistinguishable from measured sensor data by the discriminator network, wherein
   - the discriminator network is configured to receive (360) discriminator input data comprising synthesized sensor data and/or measured sensor data, and to produce (370) as output the localized distinguishing information, the localized distinguishing information indicating for a plurality of sub-sets of the discriminator input data if said sub-set corresponds to measured sensor data or to synthesized sensor data.

2. A training method as in Claim 1, wherein the measured sensor data comprise a measured image obtained from an image sensor, and wherein the synthesized sensor data comprise a synthesized image.

3. A training method as in Claim 1 or 2, wherein measured sensor data, synthesized sensor data and the discriminator input data comprise a plurality of values indicating a plurality of sensor values, such as pixel values or sample values, the localized distinguishing information indicating for the plurality of values if said value corresponds to measured sensor data or synthesized sensor data.

4. A training method as in any one of the preceding claims, wherein

   - optimizing the discriminator network comprises optimizing for the localized distinguishing information correctly indicating for the plurality of sub-sets of the discriminator input data if said sub-set corresponds to measured sensor data or synthesized sensor data.

5. A training method as in Claim 4, wherein a discriminator input data is part measured sensor data obtained from the training data and part synthesized sensor data obtained from the generator network.

6. A training method as in any one of the preceding claims, wherein

   - optimizing the generator network comprises optimizing for the localized distinguishing information obtained from synthesized sensor data indicating that the plurality of sub-sets of the synthesized sensor data corresponds to measured sensor data.

7. A training method as in any one of the preceding claims, wherein the discriminator neural network is further configured to produce as output global distinguishing information, the global distinguishing information indicating the proportion of the discriminator input data that corresponds to measured sensor data.

8. A training method as in any one of the preceding claims, wherein

- the training set comprises ground-truth class-labels for the measured sensor data, and
- the discriminator network is a conditional network receiving a class label as input, the class label indicating a class of the discriminator input data, the discriminator neural network being optimized to distinguish if the discriminator input data corresponds to the class.

9. A training method as in claim 7, wherein the encoder network is configured to produce the global distinguishing information as output.

10. A training method as in any one of the preceding claims, wherein the encoder network is configured to down-sample the encoder input and the decoder network is configured to up-sample the decoder input, the discriminator network comprising multiple skip-connections from layers in the encoder network to layers in the discriminator network.

11. A method to generate further training data for a machine learnable model, the method comprises

- obtaining an initial training set for the machine learnable model, the initial training set comprising measured sensor data obtained from a sensor,
- training a generator network from the initial training set using the training method according to any one of claims 1-10,
- applying the trained generator network to generate further training data.

12. A method to train a machine learnable model, the method comprises

- obtaining an initial training set for the machine learnable model,
- generating further training data for the machine learnable model according to the method of claim 11, and
- training and/or testing the machine learnable model at least on the further training data.

13. A training system (200; 260) for training a generator neural network (110; 120, 130, 140) configured to generate synthesized sensor data (141) for training and testing a classifier, wherein the classifier is classifying measured sensor data, the system comprising

- a communication interface for accessing a training set (240) of measured sensor data obtained from a sensor,
- a processor system configured to train the generator network together with a discriminator neural network (160; 172, 174), wherein the discriminator network comprises an encoder network and a decoder network, wherein
- the encoder network is configured to receive as input the discriminator input data,
- the decoder network is configured to receive as input the encoder network output and to produce as output localized distinguishing information and
wherein the discriminator network is optimized to distinguish between measured sensor data and synthesized sensor data, the generator network is optimized to generate synthesized sensor data which is indistinguishable from measured sensor data by the discriminator network, wherein
- the discriminator network is configured to receive discriminator input data comprising synthesized sensor data and/or measured sensor data, and to produce as output the localized distinguishing information, the localized distinguishing information indicating for a plurality of sub-sets of the discriminator input data if said sub-set corresponds to measured sensor data or synthesized sensor data.

14. A generator system for a generator neural network arranged to generate synthesized sensor data, the system comprising

- a processor system arranged to apply a trained generator network, wherein the generator network has been trained with the method or system of any one of claims 1-10 or 13,
- a communication interface for transmitting or storing the synthesized sensor data.

**15.** An autonomous apparatus, e.g., an autonomous vehicle, comprising

- a sensor for sensing an environment of the apparatus and to generate measured sensor data,
- a classifier comprising a machine learnable model, the classifier being trained to classify an object in the environment of the apparatus from the measured sensor data,
- a controller configured to generate a control signal to control the autonomous apparatus, the controller being configured to generate the control signal at least from the object classified by the classifier,
- an actuator configured to move under the control of the control signal, wherein
- the machine learnable model is trained with a method according to claim 12.

**16.** A transitory or non-transitory computer readable medium (1000) comprising data (1020) representing instructions, which when executed by a processor system, cause the processor system to carry out the method according to any one of claims 1-12.

**Patentansprüche**

**1.** Trainingsverfahren (300) zum Trainieren eines neuronalen Generatornetzwerks (110; 120, 130, 140), ausgelegt zum Erzeugen synthetisierter Sensordaten (141) zum Trainieren und Testen eines Klassifikators, wobei der Klassifikator gemessene Sensordaten klassifiziert, wobei das Verfahren Folgendes umfasst:

- Zugreifen (310) auf eine Trainingsmenge (240) von gemessenen Sensordaten, die von einem Sensor erhalten werden,
- Trainieren (320) des neuronalen Generatornetzwerks zusammen mit einem neuronalen Diskriminatornetzwerk (160; 172, 174), wobei das Diskriminatornetzwerk ein Encoder-Netzwerk und ein Decoder-Netzwerk umfasst, wobei
- das Encoder-Netzwerk ausgelegt ist zum Empfangen der Diskriminatoreingangsdaten als Eingabe,
- das Decoder-Netzwerk ausgelegt ist zum Empfangen der Encoder-Netzwerk-Ausgabe als Eingabe und zum Produzieren lokalisierter Unterscheidungsinformationen als Ausgabe,

wobei das Training Folgendes umfasst:

- Erzeugen (330) synthetisierter Sensordaten unter Verwendung des neuronalen Generatornetzwerks,
- dahingehendes Optimieren (340) des Diskriminatornetzwerks, zwischen gemessenen Sensordaten und synthetisierten Sensordaten zu unterscheiden,
- dahingehendes Optimieren (350) des Generatornetzwerks, synthetisierte Sensordaten zu erzeugen, die für das Diskriminatornetzwerk ununterscheidbar von gemessenen Sensordaten sind, wobei
- das Diskriminatornetzwerk ausgelegt ist zum Empfangen (360) von Diskriminatoreingangsdaten, umfassend synthetisierte Sensordaten und/oder gemessene Sensordaten, und zum Produzieren (370) der lokalisierten Unterscheidungsinformationen als Ausgabe, wobei die lokalisierten Unterscheidungsinformationen für eine Mehrzahl von Teilmengen der Diskriminatoreingangsdaten angeben, ob die Teilmenge gemessenen Sensordaten oder synthetisierten Sensordaten entspricht.

**2.** Trainingsverfahren nach Anspruch 1, wobei die gemessenen Sensordaten ein von einem Bildsensor erhaltenes gemessenes Bild umfassen und wobei die synthetisierten Sensordaten ein synthetisiertes Bild umfassen.

**3.** Trainingsverfahren nach Anspruch 1 oder 2, wobei gemessene Sensordaten, synthetisierte Sensordaten und die Diskriminatoreingangsdaten eine Mehrzahl von Werten umfassen, die eine Mehrzahl von Sensorwerten wie Pixelwerte oder Abtastwerte angeben, wobei die lokalisierten Unterscheidungsinformationen für die Mehrzahl von Werten angeben, ob der Wert gemessenen Sensordaten oder synthetisierten Sensordaten entspricht.

**4.** Trainingsverfahren nach einem der vorhergehenden Ansprüche, wobei

- das Optimieren des Diskriminatornetzwerks dahingehendes Optimieren umfasst, dass die lokalisierten Unterscheidungsinformationen für die Mehrzahl von Teilmengen der Diskriminatoreingangsdaten korrekt angeben, ob die Teilmenge gemessenen Sensordaten oder synthetisierten Sensordaten entspricht, umfasst.

**5.** Trainingsverfahren nach Anspruch 4, wobei es sich bei einem Diskriminatoreingangsdatenelement zum Teil um aus den Trainingsdaten erhaltene gemessene Sensordaten und zum Teil um aus dem Generatornetzwerk erhaltene synthetisierte Sensordaten handelt.

6. Trainingsverfahren nach einem der vorhergehenden Ansprüche, wobei

   - das Optimieren des Diskriminatornetzwerks dahingehendes Optimieren umfasst, dass die aus synthetisierten Sensordaten erhaltenen lokalisierten Unterscheidungsinformationen angeben, dass die Mehrzahl von Teilmengen der synthetisierten Sensordaten gemessenen Sensordaten entspricht.

7. Trainingsverfahren nach einem der vorhergehenden Ansprüche, wobei das neuronale Diskriminatornetzwerk ferner ausgelegt ist zum Produzieren globaler Unterscheidungsinformationen als Ausgabe, wobei die globalen Unterscheidungsinformationen den Anteil der Diskriminatoreingangsdaten, der gemessenen Sensordaten entspricht, angeben.

8. Trainingsverfahren nach einem der vorhergehenden Ansprüche, wobei

   - die Trainingsmenge Ground-Truth-Klassen-Labels für die gemessenen Sensordaten umfasst und
   - das Diskriminatornetzwerk ein konditionales Netzwerk ist, dass ein Klassen-Label als Eingabe empfängt, wobei das Klassen-Label eine Klasse der Diskriminatoreingangsdaten angibt, wobei das neuronale Diskriminatornetzwerk dahingehend optimiert ist, zu unterscheiden, ob die Diskriminatoreingangsdaten der Klasse entsprechen.

9. Trainingsverfahren nach Anspruch 7, wobei das Encoder-Netzwerk ausgelegt ist zum Produzieren der globalen Unterscheidung Informationen als Ausgabe.

10. Trainingsverfahren nach einem der vorhergehenden Ansprüche, wobei das Encoder-Netzwerk ausgelegt ist zum Downsampling der Encoder-Eingabe und das Decoder-Netzwerk ausgelegt ist zum Upsampling der Decoder-Eingabe, wobei das Diskriminatornetzwerk mehrere Skip-Verbindungen von Schichten in dem Encoder-Netzwerk zu Schichten in dem Diskriminatornetzwerk umfasst.

11. Verfahren zum Erzeugen weiterer Trainingsdaten für ein maschinell lernbares Modell, wobei das Verfahren Folgendes umfasst:

   - Erhalten einer anfänglichen Trainingsmenge für das maschinell lernbare Modell, wobei die anfängliche Trainingsmenge von einem Sensor erhaltende gemessene Sensordaten umfasst,
   - Trainieren eines Generatornetzwerks aus der anfänglichen Trainingsmenge unter Verwendung des Trainingsverfahrens nach einem der Ansprüche 1-10,
   - Anwenden des trainierten Generatornetzwerks, um weitere Trainingsdaten zu erzeugen.

12. Verfahren zum Trainieren eines maschinellen lernbaren Modells, wobei das Verfahren Folgendes umfasst:

   - Erhalten einer anfänglichen Trainingsmenge für das maschinell lernbare Modell,
   - Erzeugen weiterer Trainingsdaten für das maschinell lernbare Modell gemäß dem Verfahren nach Anspruch 11, und
   - Trainieren und/oder Testen des maschinell lernbaren Modells mindestens an den weiteren Trainingsdaten.

13. Trainingssystem (200; 260) zum Trainieren eines neuronalen Generatornetzwerks (110; 120, 130, 140), ausgelegt zum Erzeugen synthetisierter Sensordaten (141) zum Trainieren und Testen eines Klassifikators, wobei der Klassifikator gemessene Sensordaten klassifiziert, wobei das System Folgendes umfasst:

   - eine Kommunikationsschnittstelle zum Zugreifen auf eine Trainingsmenge (240) von gemessenen Sensordaten, die von einem Sensor erhalten werden,
   - ein Prozessorsystem, ausgelegt zum Trainieren des Generatornetzwerks zusammen mit einem neuronalen Diskriminatornetzwerk (160; 172, 174), wobei das Diskriminatornetzwerk ein Encoder-Netzwerk und ein Decoder-Netzwerk umfasst, wobei
   - das Encoder-Netzwerk ausgelegt ist zum Empfangen der Diskriminatoreingangsdaten als Eingabe,
   - das Decoder-Netzwerk ausgelegt ist zum Empfangen der Encoder-Netzwerk-Ausgabe als Eingabe und zum Produzieren lokalisierter Unterscheidungsinformationen als Ausgabe,
   und

wobei das Diskriminatornetzwerk dahingehend optimiert wird, zwischen gemessenen Sensordaten und synthetisierten Sensordaten zu unterscheiden, das Generatornetzwerk optimiert dahingehend wird, synthetisierte Sensordaten zu erzeugen, die für das Diskriminatornetzwerk ununterscheidbar von gemessenen Sensordaten sind, wobei

- das Diskriminatornetzwerk ausgelegt ist zum Empfangen von Diskriminatoreingangsdaten, umfassend synthetisierte Sensordaten und/oder gemessene Sensordaten, und zum Produzieren der lokalisierten Unterscheidungsinformationen als Ausgabe, wobei die lokalisierten Unterscheidungsinformationen für eine Mehrzahl von Teilmengen der Diskriminatoreingangsdaten angeben, ob die Teilmenge gemessenen Sensordaten oder synthetisierten Sensordaten entspricht.

**14.** Generatorsystem für ein neuronales Generatornetzwerk, eingerichtet zum Erzeugen synthetisierter Sensordaten, wobei das System Folgendes umfasst:

- ein Prozessorsystem, eingerichtet zum Anwenden eines trainierten Generatornetzwerkes, wobei das Generatornetzwerk mit dem Verfahren oder System nach einem der Ansprüche 1-10 oder 13 trainiert wurde,
- eine Kommunikationsschnittstelle zum Übertragen oder Speichern der synthetisierten Sensordaten.

**15.** Autonome Einrichtung, z. B. ein autonomes Fahrzeug, umfassend:

- einen Sensor zum Erfassen einer Umgebung der Einrichtung und zum Erzeugen gemessener Sensordaten,
- einen Klassifikator, umfassend ein maschinell lernbares Modell, wobei der Klassifikator dahingehend trainiert ist, ein Objekt in der Umgebung der Einrichtung aus den gemessenen Sensordaten zu klassifizieren,
- eine Steuerung, ausgelegt zum Erzeugen eines Steuersignals zum Steuern der autonomen Einrichtung, wobei die Steuerung ausgelegt ist zum Erzeugen des Steuersignals zumindest anhand des durch den Klassifikator klassifizierten Objekts,
- einen Aktuator, der dazu ausgelegt ist, sich unter der Steuerung des Steuersignals zu bewegen, wobei
- das maschinell lernbare Modell mit einem Verfahren nach Anspruch 12 trainiert wird.

**16.** Flüchtiges oder nichtflüchtiges computerlesbares Medium (1000), umfassend Daten (1020), die Anweisungen repräsentieren, die bei Ausführung durch ein Prozessorsystem bewirken, dass das Prozessorsystem das Verfahren nach einem der Ansprüche 1-12 ausführt.

## Revendications

**1.** Procédé de formation (300) d'un réseau neuronal générateur (110 ; 120, 130, 140) configuré pour générer des données de capteur synthétisées (141) pour former et tester un classificateur, où le classificateur classe des données de capteur mesurées, le procédé comprenant les étapes suivantes :

- accéder (310) à un ensemble de formation (240) de données de capteur mesurées obtenues à partir d'un capteur,
- former (320) le réseau neuronal générateur avec un réseau neuronal discriminateur (160 ; 172, 174), où le réseau discriminateur comprend un réseau encodeur et un réseau décodeur, où :
- le réseau codeur est configuré pour recevoir en entrée les données d'entrée du discriminateur,
- le réseau décodeur est configuré pour recevoir en entrée la sortie du réseau codeur et pour produire en sortie des informations de distinction localisées,

la formation comprenant les étapes suivantes :

- générer (330) des données de capteur synthétisées à l'aide du réseau neuronal générateur,
- optimiser (340) le réseau discriminateur pour faire la distinction entre les données de capteur mesurées et les données de capteur synthétisées,
- optimiser (350) le réseau générateur pour générer les données de capteur synthétisées qui ne peuvent être distinguées des données de capteur mesurées par le réseau discriminateur, où :

- le réseau discriminateur est configuré pour recevoir (360) des données d'entrée de discriminateur comprenant des données de capteur synthétisées et/ou des données de capteur mesurées, et pour produire (370) en sortie les informations de distinction localisées, les informations de distinction localisées indiquant, pour une pluralité de sous-ensembles des données d'entrée du discriminateur, si ledit sous-ensemble correspond à des données de capteur mesurées ou à des données de capteur synthétisées.

2. Procédé de formation selon la revendication 1, dans lequel les données de capteur mesurées comprennent une image mesurée obtenue à partir d'un capteur d'image, et dans lequel les données de capteur synthétisées comprennent une image synthétisée.

3. Procédé de formation selon la revendication 1 ou la revendication 2, dans lequel les données de capteur mesurées, les données de capteur synthétisées et les données d'entrée de discriminateur comprennent une pluralité de valeurs indiquant une pluralité de valeurs de capteur, telles que des valeurs de pixel ou des valeurs d'échantillon, les informations de distinction localisées indiquant, pour la pluralité de valeurs, si ladite valeur correspond à des données de capteur mesurées ou à des données de capteur synthétisées.

4. Procédé de formation selon l'une quelconque des revendications précédentes, dans lequel :

- l'optimisation du réseau discriminateur comprend l'optimisation des informations de distinction localisées indiquant correctement, pour la pluralité de sous-ensembles des données d'entrée du discriminateur, si ledit sous-ensemble correspond à des données de capteur mesurées ou à des données de capteur synthétisées.

5. Procédé de formation selon la revendication 4, dans lequel les données d'entrée du discriminateur sont en partie des données de capteur mesurées obtenues à partir des données de formation et en partie des données de capteur synthétisées obtenues à partir du réseau générateur.

6. Procédé de formation selon l'une quelconque des revendications précédentes, dans lequel : l'optimisation du réseau générateur comprend l'optimisation, pour les informations de distinction localisées obtenues à partir des données de capteur synthétisées indiquant que la pluralité de sous-ensembles des données de capteur synthétisées correspond aux données de capteur mesurées.

7. Procédé de formation selon l'une quelconque des revendications précédentes, dans lequel le réseau neuronal discriminateur est en outre configuré pour produire en sortie des informations de distinction globales, les informations de distinction globales indiquant la proportion des données d'entrée du discriminateur qui correspondent à des données de capteur mesurées.

8. Procédé de formation selon l'une quelconque des revendications précédentes, dans lequel :

l'ensemble de formation comprend des étiquettes de classe Ground Truth pour les données de capteur mesurées, et
le réseau discriminateur est un réseau conditionnel recevant une étiquette de classe en entrée, l'étiquette de classe indiquant une classe des données d'entrée du discriminateur, le réseau neuronal discriminateur étant optimisé pour distinguer si les données d'entrée du discriminateur correspondent à la classe.

9. Procédé de formation selon la revendication 7, dans lequel le réseau codeur est configuré pour produire les informations de distinction globale en sortie.

10. Procédé de formation selon l'une quelconque des revendications précédentes, dans lequel le réseau codeur est configuré pour sous-échantillonner l'entrée du codeur et le réseau décodeur est configuré pour suréchantillonner l'entrée du décodeur, le réseau discriminateur comprenant de multiples sauts de connexion de couches du réseau codeur vers des couches du réseau discriminateur.

11. Procédé permettant de générer des données de formation supplémentaires pour un modèle à apprentissage automatique, le procédé comprenant les étapes suivantes :

obtenir un ensemble de formation initial pour le modèle à apprentissage automatique, l'ensemble de formation initial comprenant des données de capteur mesurées obtenues à partir d'un capteur,
former un réseau générateur à partir de l'ensemble de formation initial à l'aide du procédé de formation selon l'une quelconque des revendications 1 à 10,
appliquer le réseau générateur formé pour générer d'autres données de formation.

**12.** Procédé pour former un modèle à apprentissage automatique, le procédé comprenant les étapes suivantes :

obtenir un ensemble de formation initial pour le modèle à apprentissage automatique,
générer d'autres données de formation pour le modèle à apprentissage automatique conformément au procédé de la revendication 11, et
former et/ou tester le modèle à apprentissage automatique au moins sur les données de formation supplémentaires.

**13.** Système de formation (200 ; 260) pour la formation d'un réseau neuronal générateur (110 ; 120, 130, 140) configuré pour générer des données de capteur synthétisées (141) pour former et tester un classificateur, où le classificateur classe des données de capteur mesurées, le système comprenant :

une interface de communication pour accéder à un ensemble de formation (240) de données de capteur mesurées obtenues d'un capteur,
un système de processeur configuré pour former le réseau générateur avec un réseau neuronal discriminateur (160 ; 172, 174), où le réseau discriminateur comprend un réseau codeur et un réseau décodeur, où :

le réseau codeur est configuré pour recevoir en entrée les données d'entrée du discriminateur,
le réseau décodeur est configuré pour recevoir en entrée la sortie du réseau codeur et pour produire en sortie des informations de distinction localisées, et
où le réseau discriminateur est optimisé pour faire la distinction entre les données de capteur mesurées et les données de capteur synthétisées, le réseau générateur est optimisé pour générer des données de capteur synthétisées qui ne peuvent être distinguées des données de capteur mesurées par le réseau discriminateur, où :
le réseau discriminateur est configuré pour recevoir des données d'entrée du discriminateur comprenant des données de capteur synthétisées et/ou des données de capteur mesurées, et pour produire en sortie les informations de distinction localisées, les informations de distinction localisées indiquant, pour une pluralité de sous-ensembles des données d'entrée du discriminateur, si ledit sous-ensemble correspond à des données de capteur mesurées ou à des données de capteur synthétisées.

**14.** Système générateur pour un réseau neuronal générateur agencé pour générer des données de capteur synthétisées, le système comprenant :

un système processeur agencé pour appliquer un réseau générateur formé, le réseau générateur ayant été formé avec le procédé ou le système de l'une quelconque des revendications 1 à 10 ou 13,
une interface de communication pour transmettre ou stocker les données de capteur synthétisées.

**15.** Appareil autonome, par exemple un véhicule autonome, comprenant :

un capteur pour détecter l'environnement de l'appareil et générer des données de capteur mesurées,
un classificateur comprenant un modèle à apprentissage automatique, le classificateur étant formé à classer un objet dans l'environnement de l'appareil à partir des données de capteur mesurées,
un contrôleur configuré pour générer un signal de contrôle afin de contrôler l'appareil autonome, le contrôleur étant configuré pour générer le signal de contrôle au moins à partir de l'objet classé par le classificateur,
un actionneur configuré pour se déplacer sous le contrôle du signal de contrôle, où le modèle à apprentissage automatique est formé avec un procédé selon la revendication 12.

**16.** Support transitoire ou non transitoire, lisible par ordinateur, (1000) comprenant des données (1020) représentant des instructions qui, lorsqu'elles sont exécutées par un système processeur, amènent le système processeur à mettre en œuvre le procédé selon l'une quelconque des revendications 1 à 12.

Fig. 1a

Fig. 1b

Fig. 1c

Fig. 2a

Fig. 2b

300

260

263

264

265

Fig. 2c

310

320

330

340

350

360

370

Fig. 3

*Fig. 4*

*501*    *502*

*511*    *512*

*521*    *522*

0.28     0.68

*531*    *532*

*541*    *542*

*551*    *552*

0.31     0.60

*Fig. 5*

*Fig. 6*

*1000*

*1010*

*1020*

# Fig. 7a

*1110*

*1130*

*1120*

*1122*

*1124*

*1126*

*1140*

# Fig. 7b

*800*

*810*

*812*

*820*

*850*

*852*

*830*

*832*

*840*

*842*

*810'*

*822*

*820*

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IAN J. GOODFELLOW.** *Generative Adversarial Nets*
- **ANDREW BROCK.** *Large scale GAN training for high fidelity natural image synthesis*
- **TAESUNG PARK.** *Semantic Image Synthesis with Spatially-Adaptive Normalization*
- Patch-Based Image Inpainting with Generative Adversarial Networks. **UGUR DEMIR et al.** ARXIV.ORG. CORNELL UNIVERSITY LIBRARY, 201 OLIN LIBRARY CORNELL UNIVERSITY, 20 March 2018

- Dual Encoder-Decoder based Generative Adversarial Networks for Disentangled Facial Representation Learning. **CONG HU et al.** ARXIV.ORG. j CORNELL UNIVERSITY LIBRARY, 201 OLIN LIBRARY CORNELL UNIVERSITY, 19 September 2019
- **ANDREW BROCK ; JEFF DONAHUE ; KAREN SIMONYAN.** Large scale GAN training for high fidelity natural image synthesis. *International Conference on Learning Representations (ICLR),* 2019